# EUROPÄISCHE PATENTSCHRIFT

(11) **EP 2 650 119 B1**
(45) Veröffentlichungstag und Bekanntmachung des Hinweises auf die Patenterteilung: **14.11.2018**
(21) Anmeldenummer: 13161893.6
(22) Anmeldetag: 30.03.2013
(51) Int. Cl.: B32B 7/02, B32B 21/08, B32B 27/10, B32B 27/40, E04F 15/02, E04F 15/20

(54) **Deckschicht mit körperschalldämmenden Eigenschaften, insbesondere für Flächen aus Holzwerkstoffen**
Covering having sound insulating properties, especially for surfaces made of wood-based materials
Couche de recouvrement à propriétés insonorisantes, notamment pour des surfaces à base de matières dérivées du bois

(30) Priorität: 12.04.2012 DE 102012103171
(43) Veröffentlichungstag der Anmeldung: 16.10.2013
(73) Patentinhaber: Parador GmbH, 48653 Coesfeld (DE); Mondi Gronau GmbH, 48599 Gronau (DE)
(72) Erfinder: Bader, Herbert Dr., 48356 Nordwalde (DE); Ohneiser, Alexander, 48341 Altenberge (DE); Schwitte, Richard, 48417 Gescher (DE)
(74) Vertreter: Lorenz, Bernd Ingo Thaddeus

(56) Entgegenhaltungen:
- WO-A1-2006/104444
- WO-A1-2010/145766
- WO-A2-2006/021004
- WO-A2-2009/153680
- DE-U1- 20 109 321
- US-A1- 2003 033 777
- R. Holze: "Transparenz", Römpp Online 4.0, October 2011 (2011-10), Retrieved from the Internet: URL:https://roempp.thieme.de/roempp4.0/do/ data/RD-20-02457 [retrieved on 2017-07-13]

## Beschreibung

Die Erfindung betrifft die Verwendung einer Deckschicht mit körperschalldämmenden Eigenschaften, insbesondere für Flächen aus Holzwerkstoffen. Die Deckschicht kann als Folie oder im Verbund mit einem Träger als Prälaminat verarbeitet werden. Die Folie oder das Prälaminat können zur Erzeugung von Dekorflächen auf Wandvertäfelungen und Möbelflächen eingesetzt werden. Bevorzugtes Anwendungsgebiet ist die Verwendung des Materials als sogenanntes Overlay zur Fertigung von trittschallgedämmten Fußbodenbelägen.

Aus WO 2010/145766 A1 ist ein Laminatbodenpaneel bekannt, das anstelle eines konventionellen Overlays eine aufkaschierte mehrschichtige Folie aufweist, deren Oberfläche aus einem elastischen Kunststoff besteht. Die oberste Folienschicht weist dabei eine höhere Elastizität auf als die darunter liegende Schicht. Die Elastizität der Oberfläche soll die Eigenschaften des Laminatbodenpaneels bezüglich Druck und Stoßbeanspruchung verbessern. Hervorgehoben wird, dass die Wärmeableitung des Bodens verbessert und eine angenehme Fußwärme erzielt wird. Daneben wird als Vorteil auch eine Trittschallreduzierung erwähnt.

Bei einem Laminatboden wird eine Bodenfläche mit einem Holzcharakter angestrebt. Eine elastische Oberfläche geringer Härte mindert den optischen Eindruck einer Bodenfläche, die einen Hartbodencharakter nachahmt. Die weiche und elastische Oberfläche ist ferner problematisch, wenn in die Oberfläche dreidimensionale Strukturen eingeprägt werden sollen, die den Charakter von Holz oder Naturwerkstoffen nachempfinden. Insbesondere ist es schwierig, feine Strukturen, die beispielsweise für Furniere charakteristisch sind, dauerhaft in die elastische Oberfläche der aufkaschierten Folie einzubringen.

Vor diesem Hintergrund liegt der Erfindung die Aufgabe zugrunde, die Verwendung einer Deckschicht anzugeben, die gute akustische Eigenschaften aufweist, sich insbesondere durch eine wirksame Körperschalldämmung auszeichnet und eine verbesserte Oberfläche aufweist. Es soll insbesondere möglich sein, die Oberfläche der Deckschicht mit einer dauerhaften Struktur zu versehen, die der Struktur von Holzwerkstoffen nachempfunden ist.

Gegenstand der Erfindung und Lösung dieser Aufgabe ist die Verwendung einer Deckschicht nach Anspruch 1 sowie ein Prälaminat für diese Verwendung nach Anspruch 13.

Die im Rahmen der Erfindung verwendete Deckschicht weist eine Außenschicht aus einem physikalisch oder einem chemisch vernetzten Polymer und mindestens eine ebenfalls aus einem physikalisch oder chemisch vernetzten Polymer bestehende Funktionsschicht auf. Die Funktionsschicht ist an der Unterseite der Außenschicht angeordnet und hat eine geringere Shorehärte als die Außenschicht. Sowohl die Außenschicht als auch die Funktionsschicht haben elastomere Eigenschaften und bestehen vorzugsweise aus thermoplastischen Polymeren, die physikalisch vernetzt sind oder nach ihrer Extrusion, das heißt nachträglich, chemisch vernetzt werden. Eine chemische Vernetzung kann beispielsweise durch nachträgliche Bestrahlung der extrudierten Deckschicht bewirkt werden. Die Außenschicht und die Funktionsschicht der Deckschichten sind vorzugsweise coextrudiert. Die Funktionsschicht absorbiert innerhalb des Verbundes mechanische Stöße und hat einen wirksamen trittschalldämmenden Effekt. Die Außenschicht verleiht der Oberfläche eine hohe Kratzfestigkeit, geringe Abriebswerte sowie eine angenehme Haptik. Bei der erfindungsgemäßen Verwendung der Deckschicht als Overlay auf einem Laminatpaneel wird eine angenehme Fußwärme erzielt.

Die Außenschicht kann insbesondere eine Shorehärte von größer 90 A bis Shore 80 D aufweisen, wobei eine Härte von etwa Shore 60 D bevorzugt ist. Die Shorehärte der Funktionsschicht liegt insbesondere im Bereich Shore 50 A bis maximal Shore 90 A, wobei für die Funktionsschicht eine Shorehärte von etwa Shore 70 A bevorzugt ist.

Die Außenschicht und die Funktionsschicht können aus thermoplastischen Elastomeren auf Olefinbasis (TPE-O), vernetzten thermoplastischen Elastomeren auf Olefinbasis (TPE-V), thermoplastischen Elastomeren auf Urethanbasis (TPE-U), thermoplastischen Polyesterelastomeren (TPE-E), Styrol-BlockCopolymere (TPE-S) oder thermoplastischen Copolyamiden (TPE-A) bestehen. Bevorzugt bestehen die Außenschicht und die Funktionsschicht aus thermoplastischen Elastomeren auf Urethanbasis (TPE-U). Die Außenschicht kann eine durch Prägen erzeugte dreidimensionale Oberflächenstruktur aufweisen, wobei feine Strukturen, wie sie beispielsweise für Furniere typisch sind, in die Außenschicht dauerhaft eingebracht werden können.

Die Dicke der erfindungsgemäß verwendeten Deckschicht ist abhängig von dem Verwendungszweck und kann in einem weiten Parameterbereich variiert werden. Für eine wirksame Trittschalldämmung weist die Deckschicht zweckmäßig eine Gesamtdicke zwischen 50 µm und 2000 µm auf, wobei die Dicke der Funktionsschicht um den Faktor 2 bis 10 größer sein sollte als die Dicke der Außenschicht. Die Dicke der Außenschicht kann zwischen 10 µm und 200 µm variiert werden. Die Funktionsschicht kann eine Schichtdicke zwischen 60 µm und 1800 µm aufweisen. Gemäß einer bevorzugten Ausführung der Erfindung, insbesondere zur Verwendung als Overlay auf Laminatpaneelen, weist die Außenschicht eine Schichtdicke zwischen 30 µm und 100 µm und die Funktionsschicht eine Schichtdicke zwischen 100 µm und 500 µm auf.

Eine weitere Ausführung der erfindungsgemäßen Verwendung der Deckschicht ist gekennzeichnet durch eine Schichtenanordnung aus einer Mehrzahl von coextrudierten Schichten, die jeweils aus einem physikalisch oder nachträglich chemisch vernetzten thermoplastischen Polymer bestehen, wobei harte Schichten mit einer der Außenschicht entsprechenden oder zumindest vergleichbaren Shorehärte und weiche Schichten mit einer der Funktionsschicht entsprechenden oder zumindest vergleichbaren Shorehärten alternierend angeordnet sind. Die Abfolge harter Schichten und weicher Schichten bewirkt eine bessere Verteilung von Druckbelastungen und hat eine verbesserte Körperschalldämmung bzw. Trittschalldämmung zur Folge.

Die verwendete Deckschicht kann Additive, beispielsweise zur Verbesserung der Flammhemmung, der Verbesserung des elektrostatischen Verhaltens und dergleichen enthalten. Gemäß der Erfindung ist die verwendete Deckschicht transparent, insbesondere hochtransparent, ausgebildet. Sofern die Deckschicht als Folie verarbeitet wird, kann die Deckschicht an ihrer Unterseite optional im Konterdruck bedruckt sein. Ferner kann auf die coextrudierte, mindestens zweilagige Deckschicht eine Lackschicht aufgetragen werden, die auf der freien Seite der Außenschicht angeordnet ist.

Gegenstand der Erfindung ist auch ein Prälaminat mit körperschalldämmenden Eigenschaften, insbesondere zur Anwendung auf Flächen aus Holzwerkstoffen, welches aus einem Träger und einer zumindest zweilagigen Deckschicht, welche die zuvor beschriebenen Merkmale aufweist, besteht. Der Träger des Prälaminats ist biegsam, so dass das Prälaminat als Rollenware verarbeitet werden kann. Der Träger kann insbesondere aus einem Dekorpapier, einem Holzfurnier, einer bedruckten oder unbedruckten Polymerfolie, einer Metallfolie oder einem textilen Material bestehen.

Die verwendete Deckschicht umfasst vorzugsweise eine Haftvermittlerschicht, die zwischen der Funktionsschicht und dem Träger angeordnet ist. Die Haftvermittlerschicht ist auf das Material des Trägers abgestimmt. Der Träger weist zweckmäßig eine Kontaktschicht aus einem Polymer auf oder ist mit einem polymeren Material imprägniert, welches durch Anwendung von Druck und/oder Temperaturen mit der Haftvermittlerschicht der Deckschicht einen festen Verbund eingeht. Als Träger kann insbesondere ein Acrylatvorimprägniertes Dekorpapier verwendet werden, welches mit einer Haftvermittlerschicht auf der Basis eines Copolymers auf Polyamidbasis einen festen Verbund eingeht.

Gemäß einer bevorzugten Ausführung der Erfindung ist die Deckschicht durch Coextrusionsbeschichtung unmittelbar auf dem Träger aufgebracht. Im Rahmen der Erfindung liegt es aber auch, dass die Deckschicht aus einer Coextrusionsfolie besteht, die mittels eines Klebstoffes oder durch Heißverpressen mit dem Träger verbunden ist.

Das erfindungsgemäße Prälaminat kann mit beliebigen Trägersystemen verklebt und zu kompletten Paneelen weiter veredelt werden. Insbesondere kann das Prälaminat als Overlay, das heißt Deckmaterial, auf Paneelen für Laminatböden verwendet werden, um das Trittschalldämmungsverhalten zu verbessern. Das erfindungsgemäße Prälaminat ist frei von Halogenen sowie Weichmachern und bildet eine diffusionsoffene, das heißt atmungsaktive, Oberfläche. Weiterhin besitzt das erfindungsgemäße Prälaminat eine intrinsische elektrostatische Ableitfähigkeit, wodurch die elektrische Aufladung beim Begehen vermindert ist. Aufgrund der Relaxationsfähigkeit und Elastizität der Deckschicht, insbesondere durch die weichen, elastischen Eigenschaften der Funktionsschicht, können sich Verformungen durch Druckbelastung nahezu vollständig zurückstellen. Neben der Anwendung im Fußbodenbereich kann das erfindungsgemäße Prälaminat auch als Dekorfläche in anderen Endprodukten, z. B. Wandvertäfelungen, Möbelflächen und dergleichen eingesetzt werden.

Im Folgenden wird die Erfindung anhand einer lediglich ein Ausführungsbeispiel darstellenden Zeichnung erläutert. Es zeigen schematisch:
- **Fig. 1**: den Schichtenaufbau einer zumindest zweilagigen Deckschicht mit körperschalldämmenden Eigenschaften,
- **Fig. 2**: den Schichtenaufbau eines erfindungsgemäßen Prälaminats mit körperschalldämmenden Eigenschaften,
- **Fig. 3**: die mikroskopische Aufnahme eines Dünnschnitts einer entsprechenden Probe des Prälaminats,
- **Fig. 4**: den Schichtenaufbau einer Ausführungsvariante des erfindungsgemäßen Prälaminats.

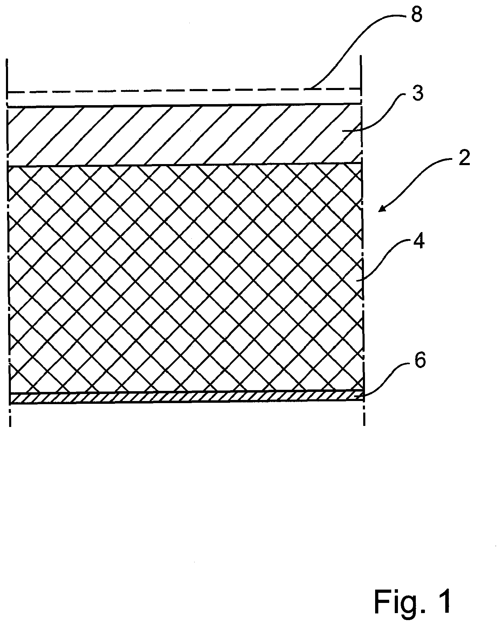

Die in Fig. 1 dargestellte Deckschicht 2 zur erfindungsgemäßen Verwendung weist eine Außenschicht 3 aus einem physikalisch oder chemisch vernetzten Polymer sowie eine ebenfalls aus einem physikalisch oder chemisch vernetzten Polymer bestehende Funktionsschicht 4 auf. Die Funktionsschicht 4 ist an der Unterseite der Außenschicht 3 angeordnet und hat eine geringere Shorehärte als die Außenschicht 3. Die beiden Schichten 3, 4 bestehen aus thermoplastischen Elastomeren, wobei thermoplastische Elastomere auf Urethanbasis bevorzugt sind.

Die Außenschicht 3 weist eine Shorehärte von größer Shore 90 A bis Shore 80 D auf. Die elastomere Funktionsschicht 4 hat eine Shorehärte von Shore 50 A bis maximal Shore 90 A.

Die Gesamtdicke der Deckschicht 2 liegt in einem Bereich zwischen 50 µm und 2000 µm, wobei die Dicke der Funktionsschicht 4 um den Faktor 2 bis 10 größer ist als die Dicke der Außenschicht 3.

Die Deckschicht 2 ist im Ausführungsbeispiel der Fig. 1 als Coextrusionsfolie gefertigt, die an ihrer Unterseite eine im Konterdruckverfahren aufgebrachte Druckschicht 6 aufweist. Optional kann auf der freien Seite der Außenschicht eine zusätzliche Lackschicht 8 aufgetragen sein.

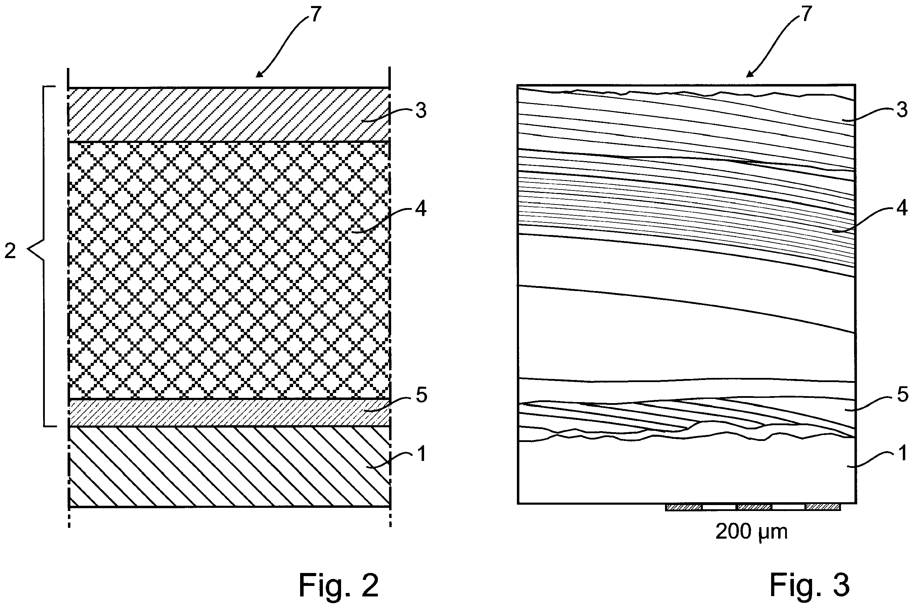

Die Fig. 2 und 3 zeigen den Schichtenaufbau eines Prälaminats 7. Das Prälaminat 7 ist ein vorgefertigtes Laminat, welches von der Rolle verarbeitet werden und auf Flächen aus Holzwerkstoffen aufkaschiert werden kann. Das Prälaminat 7 kann insbesondere als sogenanntes Overlay zur Fertigung von trittschallgedämmten Fußbodenbelägen eingesetzt werden. Die körperschalldämmenden Eigenschaften des Prälaminats 7 verbessern die Akustik und wirken sich vorteilhaft auf die Haptik des Fußbodenlaminats aus.

Das in der Fig. 2 in einer schematischen Darstellung und in Fig. 3 in Form einer mikroskopischen Aufnahme einer Probe dargestellte Prälaminat 7 besteht aus einem Träger 1 und einer zumindest zweilagigen Deckschicht 2, wobei die Deckschicht 2 eine Außenschicht 3 aus einem physikalisch oder nachträglich chemisch vernetzten thermoplastischen Polymer aufweist und wobei zwischen der Außenschicht 3 und dem Träger 1 eine ebenfalls aus einem physikalisch oder nachträglich chemisch vernetzten thermoplastischen Polymer bestehende weichere Funktionsschicht 4 angeordnet ist. Die Außenschicht 3 sowie die Funktionsschicht 4 haben die anhand der Fig. 1 erläuterten Shorehärten und Schichtdicken.

Die Deckschicht 2 des Prälaminats 7 weist ferner eine Haftvermittlerschicht 5 auf, die zwischen der Funktionsschicht 4 und dem Träger 1 angeordnet ist und auf das Material des Trägers 1 so abgestimmt ist, dass durch Verwendung von Druck und/oder Temperatur ein fester Verbund zwischen der Haftvermittlerschicht 5 und dem Träger 1 entsteht.

Die Deckschicht 2 des in den Fig. 2 und 3 dargestellten Prälaminats 7 ist im Ausführungsbeispiel durch Coextrusionsbeschichtung auf dem Träger 1 aufgebracht worden und transparent. Der Träger 1 besteht aus einem biegsamen Material, so dass das Prälaminat 7 als Rollenware verarbeitet werden kann. Als Trägermaterialien kommen insbesondere Dekorpapiere, Holzfurniere, bedruckte oder unbedruckte Polymerfolien, Metallfolien oder textile Materialien, z. B. Gewebe oder Nonwoven, in Betracht. Im Ausführungsbeispiel der Fig. 2 und 3 besteht der Träger 1 aus einem Acrylat-vorimprägnierten Dekorpapier.

Bei dem in den Fig. 2 und 3 dargestellten Ausführungsbeispiel besteht die Außenschicht 3 des Prälaminats 7 aus einem thermoplastischen Polyurethan-Elastomer (TPU), welches als Zäh-Elastomer eingestellt ist und eine Shorehärte Shore 60 D aufweist. Die Funktionsschicht 4 besteht ebenfalls aus einem thermoplastischen Polyurethan-Elastomer, welches als Weich-Elastomer eingestellt ist und eine Shorehärte Shore 70 A aufweist. Die Schichtdicke der Deckschicht 2 beträgt 425 µm.

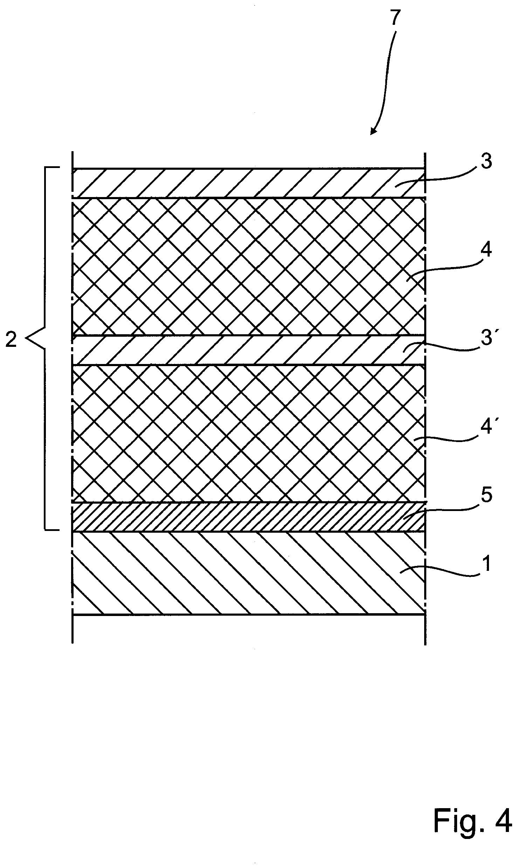

Im Ausführungsbeispiel der Fig. 4 weist die Deckschicht 2 des Prälaminats 7 eine Schichtenanordnung aus einer Mehrzahl von coextrudierten Schichten 3, 4, 3', 4' auf, die jeweils aus einem physikalisch oder nachträglich chemisch vernetzten thermoplastischen Polymer bestehen, wobei die Schichten 3, 3' mit einer der Außenschicht entsprechenden großen Shorehärte und die Schichten 4, 4' mit einer der Funktionsschicht 4 entsprechenden kleineren Shorehärte alternierend angeordnet sind. Die härteren elastomeren Schichten 3, 3' weisen in der Summe eine Gesamtdicke zwischen 30 µm und 100 µm auf. Die weicheren Schichten 4, 4' summieren sich zu einer Gesamtdicke zwischen 100 µm und 500 µm. Die Schichtenanordnung der Fig. 4 mit einer Abfolge harter und weicher elastomerer Schichten 3, 4, 3', 4' führt zu einer besseren Verteilung von Druckbelastungen auf die unteren Schichten und trägt zu einer besseren Körperschalldämmung bzw. Trittschalldämmung bei.

## Patentansprüche

1. Verwendung einer Deckschicht (2) mit körperschalldämmenden Eigenschaften als Dekorfläche auf Wandvertäfelungen und Möbelflächen oder als Overlay auf trittschallgedämmten Fußbodenbelägen, wobei die Deckschicht transparent ist und mit einer Außenschicht (3) aus einem physikalisch oder chemisch vernetzten Polymer und mindestens einer ebenfalls aus einem physikalisch oder chemisch vernetzten Polymer bestehenden Funktionsschicht (4) ausgebildet ist, wobei die Funktionsschicht an der Unterseite der Außenschicht (3) angeordnet ist und eine geringere Shorehärte aufweist als die Außenschicht (3).

2. Verwendung nach Anspruch 1, **dadurch gekennzeichnet, dass** die Außenschicht (3) eine Shorehärte von größer Shore 90 A bis Shore 80 D aufweist.

3. Verwendung nach Anspruch 1 oder 2, **dadurch gekennzeichnet, dass** die Funktionsschicht (4) eine Shorehärte von Shore 50 A bis maximal Shore 90 A aufweist.

4. Verwendung nach einem der Ansprüche 1 bis 3, **dadurch gekennzeichnet, dass** die Außenschicht (3) eine Shorehärte von etwa Shore 60 D und die Funktionsschicht (4) eine Shorehärte von etwa Shore 70 A aufweist.

5. Verwendung nach einem der Ansprüche 1 bis 4, **dadurch gekennzeichnet, dass** die Außenschicht (3) und die Funktionsschicht (4) aus thermoplastischen Elastomeren, vorzugsweise aus der Gruppe der Polyurethane, bestehen.

6. Verwendung nach einem der Ansprüche 1 bis 5, **dadurch gekennzeichnet, dass** die Deckschicht (2) eine Gesamtdicke zwischen 50 µm und 2000 µm aufweist und dass die Dicke der Funktionsschicht (4) um den Faktor 2 bis 10 größer ist als die Dicke der Außenschicht (3).

7. Verwendung nach Anspruch 6, **dadurch gekennzeichnet, dass** die Außenschicht (3) eine Schichtdicke zwischen 30 µm und 100 µm und die Funktionsschicht (4) eine Schichtdicke zwischen 100 µm und 550 µm aufweist.

8. Verwendung nach einem der Ansprüche 1 bis 7, **gekennzeichnet durch** eine Schichtenanordnung aus einer Mehrzahl von coextrudierten Schichten (3, 4, 3', 4'), die jeweils aus einem physikalisch oder nachträglich chemisch vernetzten thermoplastischen Polymer bestehen, wobei harte Schichten (3, 3'), die eine mit der Außenschicht entsprechende oder vergleichbare Shorehärte aufweisen, und weiche Schichten (4, 4'), die eine der Funktionsschicht entsprechende oder vergleichbare Shorehärte aufweisen, alternierend angeordnet sind.

9. Verwendung nach Anspruch 8, **dadurch gekennzeichnet, dass** die Schichten (3, 3'), die eine der Außenschicht entsprechende oder vergleichbare Shorehärte aufweisen, in der Summe eine Gesamtdicke zwischen 30 µm und 100 µm aufweisen, und dass die weicheren Schichten (4, 4') in der Summe eine Gesamtdicke zwischen 100 µm und 500 µm haben.

10. Verwendung nach einem der Ansprüche 1 bis 9, **dadurch gekennzeichnet, dass** die Außenschicht (3) eine durch Prägen erzeugte dreidimensionale Oberflächenstruktur aufweist.

11. Verwendung nach einem der Ansprüche 1 bis 10, **dadurch gekennzeichnet, dass** die Deckschicht (2) an ihrer Unterseite bedruckt ist.

12. Verwendung nach einem der Ansprüche 1 bis 11, **dadurch gekennzeichnet, dass** auf der freien Seite der Außenschicht (3) eine Lackschicht (8) aufgetragen ist.

13. Prälaminat (7) mit körperschalldämmenden Eigenschaften, zur Erzeugung von Dekorflächen auf Wandvertäfelungen und Möbelflächen oder zur Verwendung als Overlay zur Fertigung von trittschallgedämmten Fußbodenbelägen, bestehend aus einem Träger (1) und einer zumindest zweilagigen transparenten Deckschicht (2) wie sie in der Verwendung nach einem der Ansprüche 1 bis 12 verwendet wird.

14. Prälaminat (7) nach Anspruch 13, **dadurch gekennzeichnet, dass** die Deckschicht (2) eine Haftvermittlerschicht (5) aufweist, die zwischen der Funktionsschicht (4) und dem Träger (1) angeordnet ist.

15. Prälaminat (7) nach Anspruch 14, **dadurch gekennzeichnet, dass** der Träger (1) eine Kontaktschicht aus einem Polymer aufweist oder mit einem polymeren Material imprägniert ist, welches durch Anwendung von Druck und/oder Temperatur mit der Haftvermittlerschicht (5) einen festen Verbund eingeht.

16. Prälaminat (7) nach einem der Ansprüche 13 bis 15, **dadurch gekennzeichnet, dass** die Deckschicht (2) durch Coextrusionsbeschichtung auf den Träger (1) aufgebracht ist.

17. Prälaminat (7) nach einem der Ansprüche 13 bis 15, **dadurch gekennzeichnet, dass** die Deckschicht (2) aus einer Coextrusionsfolie besteht, die mittels eines Klebstoffes oder durch Heißverpressen mit dem Träger (1) verbunden ist.

18. Prälaminat (7) nach einem der Ansprüche 13 bis 17, **dadurch gekennzeichnet, dass** der Träger (1) aus einem Dekorpapier, einem Holzfurnier, einer bedruckten oder unbedruckten Polymerfolie, einer Metallfolie oder einem textilen Material besteht.

## Claims

1. Use of a cover layer (2) with structure-borne sound attenuating properties as a decorative surface on wall panellings and furniture surfaces or as an overlay on footfall sound-insulated floor coverings, wherein the cover layer is transparent and is formed with an outer layer (3) of a physically or chemically cross-linked polymer and at least one functional layer (4) also consisting of a physically or chemically cross-linked polymer, wherein the functional layer is arranged on the underside of the outer layer (3) and has a lower Shore hardness than the outer layer (3).

2. The use according to claim 1, **characterized in that** the outer layer (3) has a Shore hardness of greater than Shore 90 A to Shore 80 D.

3. The use according to claim 1 or 2, **characterized in that** the functional layer (4) has a Shore hardness from Shore 50 A to a maximum of Shore 90 A.

4. The use according to one of claims 1 to 3, **characterized in that** the outer layer (3) has a Shore hardness of about Shore 60 D and the functional layer (4) has a Shore hardness of about Shore 70 A.

5. The use according to one of claims 1 to 4, **characterized in that** the outer layer (3) and the functional layer (4) consist of thermoplastic elastomers, preferably from the group of polyurethanes.

6. The use according to one of claims 1 to 5, **characterized in that** the cover layer (2) has a total thickness between 50 µm and 2000 µm and that the thickness of the functional layer (4) is a factor of 2 to 10 larger than the thickness of the outer layer (3).

7. The use according to claim 6, **characterized in that** the outer layer (3) has a layer thickness between 30 µm and 100 µm and the functional layer (4) has a layer thickness between 100 µm and 550 µm.

8. The use according to one of claims 1 to 7, **characterized by** a layer arrangement comprising a plurality of co-extruded layers (3, 4, 3', 4') each consisting of a physically or subsequently chemically cross-linked thermoplastic polymer, wherein hard layers (3, 3') having a Shore hardness corresponding or comparable to the outer layer and soft layers (4, 4') having a Shore hardness corresponding or comparable to the functional layer are arranged alternately.

9. The use according to claim 8, **characterized in that** the layers (3, 3') having a Shore hardness corresponding or comparable to the outer layer overall have a total thickness between 30 µm and 100 µm and that the soft layers (4, 4') overall have a total thickness between 100 µm and 500 µm.

10. The use according to one of claims 1 to 9, **characterized in that** the outer layer (3) has a three-dimensional surface structure produced by stamping.

11. The use according to one of claims 1 to 10, **characterized in that** the cover layer (2) is printed on its underside.

12. The use according to one of claims 1 to 11, **characterized in that** a varnish layer (8) is applied to the free side of the outer layer (3).

13. A prelaminate (7) with structure-borne sound attenuating properties to produce decorative surfaces on wall panellings and furniture surfaces or for use as an overlay to fabricate footfall sound-insulated floor coverings, consisting of a support (1) and at least one two-ply transparent cover layer (2) as is used in the use according to one of claims 1 to 12.

14. The prelaminate (7) according to claim 13, **characterized in that** the cover layer (2) comprises an adhesion promoting layer (5) which is arranged between the functional layer (4) and the support (1).

15. The prelaminate (7) according to claim 14, **characterized in that** the support (1) comprises a contact layer made of a polymer or is impregnated with a polymer material, which undergoes a firm bond with the adhesion promoting layer (5) by application of pressure and/or temperature.

16. The prelaminate (7) according to one of claims 13 to 15, **characterized in that** the cover layer (2) is applied by co-extrusion coating to the support (1).

17. The prelaminate (7) according to one of claims 13 to 15, **characterized in that** the cover layer (2) consists of a co-extrusion film which is joined to the support (1) by means of an adhesive or by hot pressing.

18. The prelaminate (7) according to one of claims 13 to 17, **characterized in that** the support (1) consists of a decorative paper, a wood veneer, a printed or unprinted polymer film, a metal film or a textile material.

## Revendications

1. Emploi d'une couche de revêtement (2) aux propriétés d'isolation des bruits de structure en tant que face décorative sur des boiseries murales et des surfaces de meubles ou en tant que recouvrement sur des revêtements de sol isolés contre les bruits de pas, dans lequel la couche de revêtement est transparente et formée d'une couche extérieure (3) dans un polymère réticulé physiquement ou chimiquement et au moins d'une couche fonctionnelle (4) également dans un polymère réticulé physiquement ou chimiquement, dans lequel la couche fonctionnelle est disposée sur la face inférieure de la couche extérieure (3) et présente une dureté shore plus faible que la couche extférieure (3).

2. Emploi selon la revendication 1, **caractérisé en ce que** la couche extérieure (3) présente une dureté Shore supérieure à Shore 90 A à Shore 80 D.

3. Emploi selon la revendication 1 ou 2, **caractérisé en ce que** la couche fonctionnelle (4) présente une dureté Shore de Shore 50 A à Shore 90 A maximum.

4. Emploi selon l'une des revendications 1 à 3, **caractérisé en ce que** la couche extérieure (3) présente une dureté shore d'environ Shore 60 D et la couche fonctionnelle (4) une dureté Shore d'environ Shore 70 A.

5. Emploi selon l'une des revendications 1 à 4, **caractérisé en ce que** la couche extérieure (3) et la couche fonctionnelle (4) sont en élastomères thermoplastiques, de préférence du groupe des polyuréthanes.

6. Emploi selon l'une des revendications 1 à 5, **caractérisé en ce que** la couche de revêtement (2) présente une épaisseur totale entre 50 µm et 2000 µm et que l'épaisseur de la couche fonctionnelle (4) est plus grande d'un facteur de 2 à 10 que l'épaisseur de la couche extérieure (3).

7. Emploi selon la revendication 6, **caractérisé en ce que** la couche extérieure (3) présente une épaisseur de couche entre 30 µm et 100 µm et la couche fonctionnelle (4) une épaisseur de couche entre 100 µm et 550 µm.

8. Emploi selon l'une des revendications 1 à 7, **caractérisé par** un agencement de couches à partir d'une pluralité de couches coextrudées (3, 4, 3', 4') qui sont chacune dans un polymère réticulé physiquement ou chimiquement ultérieurement, dans lequel des couches dures (3, 3') qui présentent une dureté Shore correspondant à ou comparable à la couche extérieure et des couches molles (4, 4') qui présentent une dureté Shore correspondant à ou comparable à la couche fonctionnelle, sont disposées en alternance.

9. Emploi selon la revendication 8, **caractérisé en ce que** les couches (3, 3') qui présentent une dureté Shore correspondant à ou comparable à la couche extérieure, présentent totalisées, une épaisseur totale entre 30 µm et 100 µm et que les couches plus molles (4, 4') présentent totalisées, une épaisseur totale entre 100 µm et 500 µm.

10. Emploi selon l'une des revendications 1 à 9, **caractérisé en ce que** la couche extérieure (3) présente une structure surfacique tridimensionnelle produite par gaufrage.

11. Emploi selon l'une des revendications 1 à 10, **caractérisé en ce que** la couche de revêtement (2) est imprimée sur sa face inférieure.

12. Emploi selon l'une des revendications 1 à 11, **caractérisé en ce qu'**une couche de vernis (8) est appliquée sur le côté libre de la couche extérieure (3).

13. Laminé imprégné (7) aux propriétés d'isolation des bruits de structure pour produire des faces décoratives sur des boiseries murales et des surfaces de meubles ou pour l'utilisation en tant que recouvrement pour fabriquer des revêtements de sol isolés contre les bruits de pas, composé d'un support (1) et d'au moins une couche de revêtement (2) transparente bi-couches telle qu'elle est employée dans l'emploi selon l'une des revendications 1 à 12.

14. Laminé imprégné (7) selon la revendication 13, **caractérisé en ce que** la couche de revêtement (2) présente une couche d'agent d'accrochage (5) qui est disposée entre la couche fonctionnelle (4) et le support (1).

15. Laminé imprégné (7) selon la revendication 14, **caractérisé en ce que** le support (1) présente une couche de contact en polymère et est imprégnée avec un matériau polymère, lequel adhère fixement avec la couche d'agent d'accrochage (5) par application de pression et/ou de température.

16. Laminé imprégné (7) selon l'une des revendications 13 à 15, **caractérisé en ce que** la couche de revêtement (2) est appliquée par revêtement coextrudé sur le support (1).

17. Laminé imprégné (7) selon l'une des revendications 13 à 15, **caractérisé en ce que** la couche de revêtement (2) est composée d'un film coextrudé qui est lié au support (1) par un adhésif ou par thermocompression.

18. Laminé imprégné (7) selon l'une des revendications 13 à 17, **caractérisé en ce que** le support (1) est fabriqué dans un papier décoratif, une finition bois, un film polymère imprimé ou non imprimé, un film métallique ou un matériau textile.
